# EUROPÄISCHE PATENTSCHRIFT

(11) **EP 4 200 493 B1**
(45) Veröffentlichungstag und Bekanntmachung des Hinweises auf die Patenterteilung: **01.10.2025**
(21) Anmeldenummer: 21765914.3
(22) Anmeldetag: 20.08.2021
(51) Int. Cl.: E04B 2/74, E04B 1/68, E04B 1/94

(54) **DICHTVORRICHTUNG FÜR DOPPELTE RANDFUGE SOWIE TROCKENBAUWAND**
SEALING DEVICE FOR DOUBLE EDGE JOINT AND DRY WALL
DISPOSITIF D'ÉTANCHÉITÉ POUR JOINT DE BORD DOUBLE AINSI QUE CLOISON POUR POSE À SEC

(30) Priorität: 24.08.2020 EP 20192382
(43) Veröffentlichungstag der Anmeldung: 28.06.2023
(73) Patentinhaber: Hilti Aktiengesellschaft, 9494 Schaan (LI)
(72) Erfinder: FÖRG, Christian, 86807 Buchloe (DE); KLEIN, Manfred, 86916 Kaufering (DE)
(74) Vertreter: Hilti Aktiengesellschaft Corporate Intellectual Property
(86) Internationale Anmeldenummer: PCT/EP2021/073172
(87) Internationale Veröffentlichungsnummer: WO 2022/043224

(56) Entgegenhaltungen:
- EP-A1- 3 348 729
- WO-A1-2019/201648
- DE-A1- 10 041 362
- US-A- 4 098 047
- US-A1- 2013 232 902

## Beschreibung

Die Erfindung betrifft eine Dichtvorrichtung für eine doppelte Randfuge, die zwischen einem Boden, einer Wand oder einer Decke und einer angrenzenden ersten Beplankung und einer beabstandeten zweiten Beplankung einer doppelbeplankten Trockenbauwand gebildet ist. Des Weiteren betrifft die Erfindung eine Trockenbauwand mit einer derartigen Dichtvorrichtung sowie einer ersten Beplankung, die eine erste Wandfläche der Trockenbauwand bildet, und einer zweiten Beplankung, die eine zur ersten Wandfläche entgegengesetzte zweite Wandfläche der Trockenbauwand bildet.

Randfugen, insbesondere Bodenfugen, werden ausgeführt, um eine Schallentkopplung der Trockenbauwand von angrenzenden Wänden, Decken oder Böden, insbesondere Fußböden, sicherzustellen.

Die Wandflächen der Trockenbauwände werden durch Beplankungsteile wie Gipsplatten gebildet, die häufig vor Feuchtigkeit geschützt werden müssen. Die Randfugen bilden daher auch eine Barriere, die die Beplankungsteile vor aufsteigender Nässe beispielsweise bei einem Rohrbruch schützt.

Trockenbauwände, die beispielsweise als Zwischenwände vorgesehen sind, haben auf ihren beiden zueinander entgegengesetzten Wandseiten jeweils eine Beplankung. Zwei einander entsprechende Randfugen auf den entgegengesetzten Wandseiten der Trockenbauwand bilden dabei eine doppelte Randfuge.

Die Randfugen werden üblicherweise mit einer Dichtmasse ausgespritzt, um einen Schall- und Brandschutzfunktion bereitzustellen sowie die Fuge gegen Luft und Gerüche abzudichten.

Dichtmassen haben den Nachteil, dass die Applikation zeitaufwändig sowie wenig ergonomisch ist. Ferner können Dichtmassen in der Regel nur bei Temperaturen von mindestens 5 °C zuverlässig verwendet werden und der Untergrund muss trocken sein. Auch die Inspektion ist nicht einfach, da beispielsweise die Einbautiefe nicht zerstörungsfrei überprüft werden kann.

WO 2019/201648 A1 offenbart eine gattungsgemäße Dichtvorrichtung.

Aufgabe der Erfindung ist es, eine Dichtvorrichtung für eine doppelte Randfuge einer Trockenbauwand bereitzustellen, die eine einfache Montage der Dichtvorrichtung und eine wirkungsvolle Abdichtung der doppelten Randfuge gewährleistet.

Zur Lösung der Aufgabe ist eine Dichtvorrichtung für eine doppelte Randfuge mit den Merkmalen des Anspruchs 1 vorgesehen, die zwischen einem Boden, einer Wand oder einer Decke und einer angrenzenden ersten Beplankung und einer beabstandeten zweiten Beplankung einer doppelbeplankten Trockenbauwand gebildet ist. Die Dichtvorrichtung hat ein Dichtprofil mit einem Halteabschnitt sowie einem ersten Grundkörper zum Abdichten einer ersten Randfuge an der ersten Beplankung und einem zweiten Grundkörper zum Abdichten einer zweiten Randfuge an der zweiten Beplankung. Der erste Grundkörper weist dabei einen Trägerabschnitt auf, der eine Auflage für die erste Beplankung bildet, und der zweite Grundkörper weist einen Trägerabschnitt auf, der eine Auflage für die zweite Beplankung bildet. Ferner erstreckt sich der Halteabschnitt zwischen dem ersten und dem zweiten Grundkörper und ist dazu eingerichtet, einen Spalt zwischen einer Halteschiene der Trockenbauwand und dem angrenzenden Boden, der Wand oder der Decke abzudichten. Der erste und der zweite Grundkörper sind hierbei über den Halteabschnitt miteinander verbunden und bilden gemeinsam mit diesem eine U-förmige Aufnahme für die Halteschiene der Trockenbauwand.

Die erste und die zweite Beplankung bilden dabei die beiden zueinander entgegengesetzten Wandflächen der Trockenbauwand. Ferner ist der Halteabschnitt entsprechend der Lage der Randfuge boden-, wand- oder deckenseitig angeordnet.

Es wurde erkannt, dass eine derartige Dichtvorrichtung mit geringem Aufwand montiert werden kann und eine wirkungsvolle Abdichtung für beide Randfugen der doppelten Randfuge bildet. Dabei gewährleistet der Halteabschnitt, dass die Dichtvorrichtung zuverlässig über die Halteschiene der Trockenbauwand befestigt und definiert an den beiden Beplankungen ausgerichtet ist, während die Grundkörper jeweils eine Randfuge mit einer festgelegten Breite abdichten und schließen. Somit ist die Beplankung jeder Seite der doppelbeplankten Trockenbauwand durch den entsprechenden Grundkörper des Dichtprofils effektiv vor Nässe aus einem angrenzenden Boden, einer angrenzenden Wand oder Decke geschützt.

Das weist einen sich vom ersten Grundkörper weg erstreckenden ersten Dichtsteg und einen sich vom zweiten Grundkörper weg erstreckenden zweiten Dichtsteg auf. Hierbei bildet der erste Dichtsteg eine seitliche Anlagefläche für die erste Beplankung und ist dazu eingerichtet, einen Spalt zwischen der Halteschiene der Trockenbauwand und der ersten Beplankung abzudichten, während der zweite Dichtsteg eine seitliche Anlagefläche für die zweite Beplankung bildet und dazu eingerichtet ist, einen Spalt zwischen der Halteschiene der Trockenbauwand und der zweiten Beplankung abzudichten. Die Dichtstege bilden hierbei eine weitere Dichtebene, wodurch die doppelte Randfuge besonders wirkungsvoll durch das Dichtprofil abgedichtet wird. Ferner stellen die Dichtstege sicher, dass das Dichtprofil definiert an den beiden Beplankungen ausgerichtet ist.

Ferner weist das Dichtprofil in Erstreckungsrichtung des Profils voneinander beabstandete Durchgangslöcher und/oder Längsschnitte auf, die eine Positionierhilfe bilden. Üblicherweise wird die Position einer Trockenbauwand für die Montage auf dem Boden markiert, um einen festgelegten Verlauf der Trockenbauwand zu gewährleisten. Die Durchgangslöcher bilden Sichtfenster, durch die ein Monteur den Untergrund einsehen kann, auf dem das Dichtprofil angeordnet ist. Gleiches gilt für Ausführungsformen mit Längsschnitten. Hierbei wird das Dichtprofil in den Bereichen der Längsschnitte auseinandergezogen, um die Längsschnitte vorübergehend in entsprechende Sichtfenster zu verformen. Auf diese Weise kann das Dichtprofil, insbesondere zusammen mit der Halteschiene der Trockenbauwand, mit geringem Aufwand zuverlässig entlang einer Markierung ausgerichtet werden.

Hierbei können die Durchgangslöcher und/oder Längsschnitte jeweils halteschienenseitig im und/oder benachbart zum ersten oder zweiten Grundkörper vorgesehen sein. An diesen Stellen bilden die Durchgangslöcher bzw. Längsschnitte eine besonders effektive Positionierhilfe, die das genaue Ausrichten der Dichtvorrichtung an einer Markierung besonders einfach gestaltet.

In einer weiteren Ausführungsform weist die Dichtvorrichtung für jeden Grundkörper einen intumeszierenden Streifen auf. Insbesondere ist dabei der intumeszierende Streifen in einer der Halteschiene zugewandten Ausnehmung im entsprechenden Grundkörper vorgesehen. Hierdurch ist die intumeszierende Dichtung besonders geschützt angeordnet, so dass eine Beschädigung der intumeszierenden Dichtung vermieden wird, vor allem in der Logistik oder bei der Montage. Auf diese Weise kann eine besonders zuverlässige Dichtwirkung im Brandfall gewährleistet werden, insbesondere über die gesamte Länge der Dichtvorrichtung und damit über die gesamte Länge der Randfuge.

Es kann vorgesehen sein, dass der erste und der zweite Grundkörper jeweils eine Sollbruchstelle aufweisen und/oder jeweils ein Hohlprofil mit zumindest einem Hohlraum sind. Insbesondere ist dabei die Sollbruchstelle benachbart zu einem Hohlraum des entsprechenden Hohlprofils vorgesehen. Die Gestaltung als Hohlprofil hat den Vorteil, dass das Dichtprofil sehr materialeffizient hergestellt werden kann. Ferner ist der Grundkörper in Abschnitten mit einem Hohlprofil leichter komprimierbar, wodurch raue Schnittkanten einer angrenzenden Beplankung in diesen Abschnitten wirkungsvoller abgedichtet werden. Mittels der Sollbruchstellen kann die Geometrie der Grundkörper mit geringem Aufwand definiert angepasst werden, insbesondere um die Grundkörper an die Abmessungen der Beplankung anzupassen. Dabei kann die Menge an Material, die hierzu abgetrennt werden muss und als Abfall anfällt, reduziert werden, indem die Sollbruchstellen in Bereichen mit Hohlräumen vorgesehen sind, so dass die Bruchflächen bzw. die Schnittebene durch die Hohlräume verlaufen bzw. verläuft.

Ferner kann das Dichtprofil eine Rippenstruktur aufweisen, insbesondere an Flächen, die dazu vorgesehen sind, an den Boden, die Beplankung und/oder die Halteschiene anzugrenzen. Die Rippen der Rippenstruktur können hierbei als Dichtrippen wirken, die die Dichtwirkung der Dichtvorrichtung verbessern. Des Weiteren kann hierdurch das Dichtprofil aus einem elastisch komprimierbaren Material mit vergleichsweise hoher Festigkeit gebildet sein.

Vorzugsweise erstreckt sich die Rippenstruktur in Profilrichtung des Dichtprofils, wodurch die Rippenstruktur mit geringem Aufwand herstellbar ist, insbesondere durch Extrusion.

Gemäß einer Ausführungsform ist die Dichtvorrichtung spiegelsymmetrisch gegenüber einer Mittelebene gestaltet, die sich in Erstreckungsrichtung des Dichtprofils und senkrecht zum Halteabschnitt erstreckt. Der symmetrische Aufbau der Dichtvorrichtung stellt sicher, dass beide Randfugen gleich wirkungsvoll durch die Dichtvorrichtung abgedichtet werden.

Gemäß einer weiteren Ausführungsform ist das Dichtprofil ein Extrusionsprofil, wodurch die Dichtvorrichtung mit geringem Aufwand und in beliebiger Länge hergestellt werden kann.

Das Dichtprofil kann einstückig und aus einem Schaumstoff oder einem Elastomer gebildet sein. Hierdurch ist das Dichtprofil kostengünstig herstellbar und weist ferner eine besonders hohe Dichtwirkung auf.

Es ist auch eine Trockenbauwand mit einer erfindungsgemäßen Dichtvorrichtung mit den zuvor genannten Vorteilen vorgesehen. Die Trockenbauwand umfasst ferner eine Halteschiene, eine erste Beplankung, die eine erste Wandfläche der Trockenbauwand bildet, und eine zweite Beplankung, die eine zur ersten Wandfläche entgegengesetzte zweite Wandfläche der Trockenbauwand bildet. Die Halteschiene ist in der Aufnahme der Dichtvorrichtung angeordnet, während der Halteabschnitt zwischen der Halteschiene und dem angrenzenden Boden, der Wand oder der Decke angeordnet ist. Die erste Beplankung liegt hierbei mit ihrer Umfangsseite an der Auflage des ersten Grundkörpers an und die zweite Beplankung liegt mit ihrer Umfangsseite an der Auflage des zweiten Grundkörpers an. Auf diese Weise kann die doppelte Randfuge, die zwischen dem Boden, der Wand oder Decke und der ersten Beplankung sowie der zweiten Beplankung gebildet ist, durch die Dichtvorrichtung zuverlässig sowie mit geringem Aufwand abgedichtet werden. Insbesondere kann die Dichtvorrichtung für beide Randfugen, der doppelten Randfuge in einem Schritt montiert werden.

Hierbei kann vorgesehen sein, dass das Dichtprofil einen sich vom ersten Grundkörper weg erstreckenden ersten Dichtsteg und einen sich vom zweiten Grundkörper weg erstreckenden zweiten Dichtsteg aufweist. Der erste Dichtsteg bildet dabei eine seitliche Anlagefläche für die erste Beplankung und dichtet einen Spalt zwischen der Halteschiene der Trockenbauwand und der ersten Beplankung ab, während der zweite Dichtsteg eine seitliche Anlagefläche für die zweite Beplankung bildet und einen Spalt zwischen der Halteschiene der Trockenbauwand und der zweiten Beplankung abdichtet. Auf diese Weise ist die Dichtwirkung der Dichtvorrichtung besonders groß.

Weitere Vorteile und Merkmale ergeben sich aus der nachfolgenden Beschreibung sowie aus den beigefügten Zeichnungen. In diesen zeigen:
- Figur 1 in einer schematischen Schnittdarstellung eine Trockenbauwand mit einer Dichtvorrichtung,
- Figur 2 in einer schematischen Schnittdarstellung eine Dichtvorrichtung gemäß einer weiteren Ausführungsform,
- Figur 3 in einer schematischen Schnittdarstellung eine Trockenbauwand mit einer doppelt beplankten Wandfläche und einer Dichtvorrichtung mit einem abtrennbaren Abschnitt gemäß einer weiteren Ausführungsform,
- Figur 4 in einer schematischen Schnittdarstellung eine Trockenbauwand mit einer einfach beplankten Wandfläche gemäß einer weiteren Ausführungsform und der Dichtvorrichtung aus Figur 3 mit entferntem abtrennbarem Abschnitt,
- Figur 5 in einer schematischen Schnittdarstellung eine Trockenbauwand mit einer Dichtvorrichtung gemäß einer weiteren Ausführungsform,
- Figur 6 in einer perspektivischen Darstellung eine erfindungsgemäße Dichtvorrichtung gemäß einer weiteren Ausführungsform,
- Figur 7 in einer perspektivischen Darstellung eine erfindungsgemäße Dichtvorrichtung gemäß einer weiteren Ausführungsform in einem Ausgangszustand,
- Figur 8 in einer perspektivischen Darstellung die Dichtvorrichtung aus Figur 7 in einem elastisch verformten Zustand,
- Figur 9 in einer schematischen Schnittdarstellung eine Dichtvorrichtung gemäß einer Ausführungsform, die nicht unter den Schutzumfang des Anspruchs 1 fällt, und
- Figur 10 in einer perspektivischen Darstellung eine Dichtvorrichtung gemäß einer weiteren Ausführungsform, die nicht unter den Schutzumfang des Anspruchs 1 fällt.

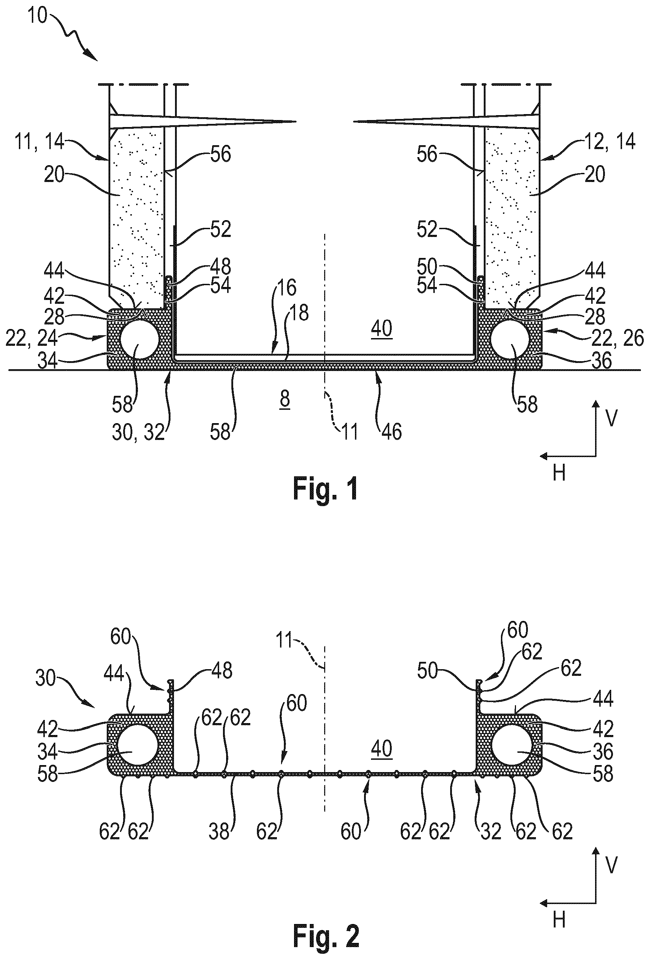

In Figur 1 ist eine doppelbeplankte Trockenbauwand 10 mit einer ersten Beplankung 11 und einer zweiten Beplankung 12 im Querschnitt gezeigt, die jeweils eine der beiden entgegengesetzt zueinander angeordneten Wandflächen 14 der Trockenbauwand 10 bilden. Die Trockenbauwand 10 umfasst ferner eine Ständerkonstruktion 16 mit einer Halteschiene 18.

Im vorliegenden Fall ist die Halteschiene 18 ein Bodenprofil, das auf dem Boden 8 fest verankert ist, beispielsweise mittels Dübel.

Die Wandflächen 14 sind jeweils einfach beplankt, d. h. die erste und die zweite Beplankung 11, 12 weisen in Horizontalrichtung H jeweils ein Beplankungsteil 20 (Gipswand) auf.

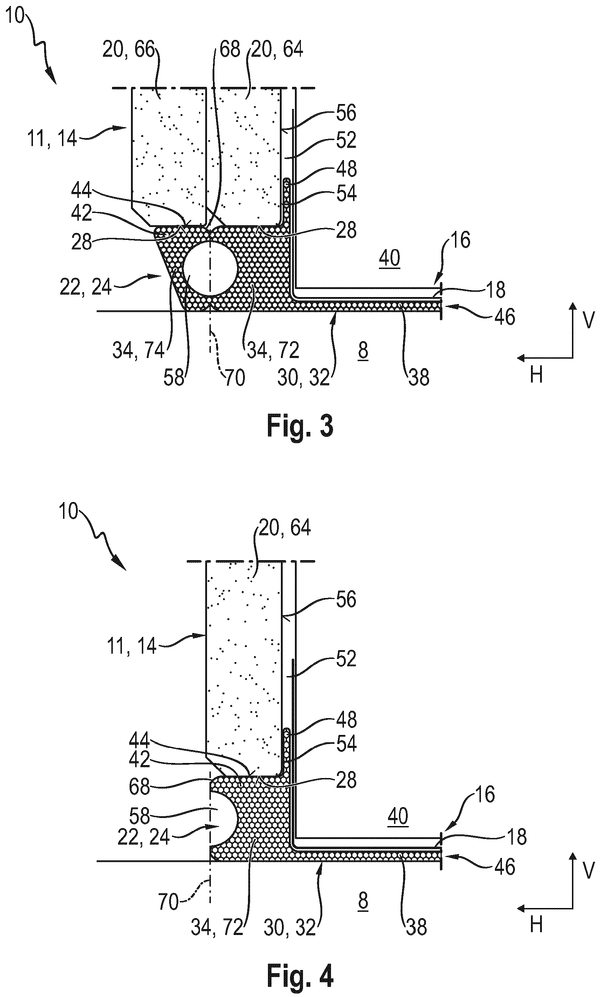

Grundsätzlich kann in einer alternativen Ausführungsform die erste und/oder die zweite Beplankung 11, 12 der Trockenbauwand 10 mehrere Beplankungsteile 20 in Horizontalrichtung H aufweisen, d. h. jede der Wandflächen 14 kann mehrlagig beplankt sein, insbesondere mit zwei in Horizontalrichtung H benachbarten Beplankungsteilen 20 (siehe Figur 3).

Die erste und die zweite Beplankung 11, 12 sind jeweils in Vertikalrichtung V beabstandet vom Boden 8 an der Ständerkonstruktion 16 angebracht, wodurch eine doppelte Randfuge 22 mit einer ersten Randfuge 24 und einer zweiten Randfuge 26 gebildet ist. Die erste Randfuge 24 ist dabei in Form einer Bodenfuge zwischen einer Umfangsseite 28 der ersten Beplankung 11 und dem Boden 8 gebildet, während die zweite Randfuge 26 in Form einer Bodenfuge zwischen einer Umfangsseite 28 der zweiten Beplankung 12 und dem Boden 8 gebildet ist.

Um die doppelte Randfuge 22 abzudichten, weist die Trockenbauwand 10 ferner eine Dichtvorrichtung 30 auf, deren Aufbau nachfolgend anhand der Figur 1 beschrieben ist. Die Dichtvorrichtung 30 ist auch zur Abdichtung einer entsprechenden doppelten Randfuge 22 zwischen Trockenbauwand 10 und Decke und/oder Wand geeignet.

Die Dichtvorrichtung 30 hat ein einstückiges Dichtprofil 32 mit einem ersten Grundkörper 34, einem zweiten Grundkörper 36 und einem bodenseitigen Halteabschnitt 38, der den ersten Grundkörper 34 und den zweiten Grundkörper 36 in Horizontalrichtung H verbindet. Der erste Grundkörper 34 und der zweite Grundkörper 36 bilden hierbei zusammen mit dem Halteabschnitt 38 eine U-förmige Aufnahme 40, in der die Halteschiene 18 aufgenommen ist.

Die Aufnahme 40 hat in Horizontalrichtung H eine Breite, die der Breite der Halteschiene 18 in Horizontalrichtung H entspricht. Hierdurch liegt das Dichtprofil 32 insbesondere mit dem ersten und zweiten Grundkörper 34, 36 dicht an der Halteschiene 18 an.

Das Dichtprofil 32 ist spiegelsymmetrisch gegenüber einer Mittelebene M gestaltet, die sich in Vertikalrichtung V sowie in Erstreckungsrichtung des Dichtprofils 32 erstreckt, wobei die Erstreckungsrichtung des Dichtprofils 32 in Figur 1 senkrecht zur Zeichenebene steht.

Der erste und der zweite Grundkörper 34, 36 haben jeweils einen ebenen Trägerabschnitt 42, der eine Auflage 44 bildet, an der die entsprechende Beplankung 11, 12 mit ihrer Umfangsseite 28 an- bzw. aufliegt.

Die Grundkörper 34, 36 bilden die Dichtabschnitte der Dichtvorrichtung 30, die die doppelte Randfuge 22 abdichten. Der erste Grundkörper 34 dichtet dabei die erste Randfuge 24 ab, während der zweite Grundkörpers 36 die zweite Randfuge 26 abdichtet.

Der Halteabschnitt 38 ist zwischen der Halteschiene 18 und dem Boden 8 angeordnet, wobei er sowohl an der Halteschiene 18 als auch am Boden 8 dicht anliegt.

Indem der Halteabschnitt 38 den ersten Grundkörper 34 mit dem zweiten Grundkörper 36 verbindet, erstreckt sich der Halteabschnitt 38 in horizontaler Richtung H über die gesamte Breite der Halteschiene 18 und bildet einen Dichtabschnitt, der den Zwischenraum 46 zwischen der Halteschiene 18 und dem Boden 8 abdichtet und insbesondere vollständig ausfüllt.

Ferner hält der Halteabschnitt 38 die Grundkörper 34, 36 in einer definierten Position, wodurch die doppelte Randfuge 22 zuverlässig abgedichtet ist.

Angrenzend an die Aufnahme 40 hat das Dichtprofil 32 einen ersten Dichtsteg 48, der sich senkrecht von dem Trägerabschnitt 42 des ersten Grundkörpers 34 weg erstreckt, und einen zweiten Dichtsteg 50, der sich senkrecht von dem Trägerabschnitt 42 des zweiten Grundkörpers 36 weg erstreckt.

Die Dichtstege 48, 50 erstrecken sich hierbei in Vertikalrichtung V jeweils in einen Spalt 52, der zwischen der Halteschiene 18 und dem an die Umfangsseite 28 angrenzenden Rand 54 der innenliegenden Stirnseite 56 der entsprechenden Beplankung 11, 12 gebildet ist.

Der Halteabschnitt 38 und die Ränder 54 liegen auf entgegengesetzten Seiten seitlich an den Dichtstegen 48, 50 flächig sowie dicht an. Auf diese Weise bilden die Dichtstege 48, 50 jeweils einen Dichtabschnitt, der den entsprechenden Spalt 52 abdichtet.

Die Dichtvorrichtung 30 ist ein extrudiertes Profil.

Das Dichtprofil 32 besteht hierbei aus einem Kunststoff, beispielsweise EPDM, PE Schaum, PP Schaum, PS Schaum, oder Partikelschaum.

Grundsätzlich kann die Dichtvorrichtung 30 aus einem beliebigen Material und auf eine beliebige Weise hergestellt sein. Vorzugsweise ist jedoch zumindest das Dichtprofil 32 ein extrudiertes Profil.

Ferner kann das Dichtprofil 32 zumindest abschnittsweise mit einer Folie ummantelt sein.

Die Grundkörper 34, 36 sind jeweils als Hohlprofil mit einem Hohlraum 58 gestaltet, wodurch das Dichtprofil 32 materialeffizient hergestellt werden kann und die Grundkörper 34, 36 in den zu den Hohlräumen 58 benachbarten Abschnitten besonders flexibel sind. Alternative können auch Grundkörper ohne Hohlraum denkbar.

Um die doppelte Randfuge 22 mit der Dichtvorrichtung 30 zuverlässig abzudichten, wird bei der Montage der Trockenbauwand 10 die Halteschiene 18 zusammen mit der Dichtvorrichtung 30 auf dem Boden 8 ausgerichtet und anschließend im Boden 8 verankert.

Die Dichtvorrichtung 30 ist separat zur Halteschiene 18 vorgesehen und wird mit dieser verbunden, indem die Halteschiene 18 in die Aufnahme 40 gesteckt bzw. eingesetzt wird.

Beim Verankern der Halteschiene 18 wird der Halteabschnitt 38 zwischen der Halteschiene 18 und dem Boden 8 geklemmt, wodurch der Zwischenraum 46 wirkungsvoll abgedichtet ist.

Nun wird die erste Beplankung 11 mit ihrer Umfangsseite 28 auf den Trägerabschnitt 42 aufgestellt, so dass der Rand 54 der Stirnseite 56 am ersten Dichtsteg 48 anliegt und der erste Grundkörper 34 gegen den Boden 8 gedrückt wird, und anschließend an der Ständerkonstruktion 16 befestigt.

Die zweite Beplankung 12 wird mittels des zweiten Grundkörpers 36 in analoger Weise entgegengesetzt zur ersten Beplankung 11 an der Ständerkonstruktion 16 befestigt.

Indem jede Beplankung 11, 12 bei der Montage auf die Dichtvorrichtung 30 abgestellt wird, ist sichergestellt, dass die beiden Randfugen 24, 26 jeweils eine definierte Breite in Vertikalrichtung V aufweisen, während das Gewicht der Beplankung 11, 12 gewährleistet, dass die Grundkörper 34, 36 dicht am Boden 8 anliegen.

Grundsätzlich kann die Dichtvorrichtung 30 zum Abdichten einer beliebigen doppelten Randfuge 22 eingesetzt werden, die zwischen den Umfangsseiten 28 zweier beabstandeter Beplankungen 11, 12 und einem angrenzenden Boden, einer angrenzenden Wand oder Decke gebildet ist.

Anhand der Figur 2 wird nun eine Dichtvorrichtung gemäß einer weiteren Ausführungsform beschrieben. Für die Bauteile, die von der obigen Ausführungsform bekannt sind, werden dieselben Bezugszeichen verwendet und es wird insoweit auf die vorangegangenen Erläuterungen verwiesen.

Im Unterschied zur Dichtvorrichtung 30, die in der Figur 1 gezeigt ist, weist das Dichtprofil 32 eine Rippenstruktur 60 mit Dichtrippen 62 auf, die sich in Erstreckungsrichtung des Dichtprofils 32 erstreckt, wobei die Erstreckungsrichtung des Dichtprofils 32 in Figur 2 senkrecht zur Zeichenebene steht.

Die Rippenstruktur 60 ist dabei auf der Seite des Dichtprofils 32 vorgesehen, die dem Boden, der Wand oder Decke zugewandt ist, und ist sowohl am Halteabschnitt 38 als auch an den Grundkörpern 34, 36 ausgebildet.

Ferner ist die Rippenstruktur 60 am Halteabschnitt 38 an der an die Aufnahme 40 angrenzenden Seite sowie an den Dichtstege 48, 50 an den der Beplankung 11,12 zugewandten Seite ausgebildet.

Selbstverständlich kann die Dichtvorrichtung 30 in einer alternativen Ausführungsform an einer oder mehreren beliebigen Flächen des Dichtprofils 32 eine Rippenstruktur 60 aufweisen, insbesondere an Flächen, die im montierten Zustand der Trockenbauwand 10 an weitere Strukturen oder Bauteile angrenzen.

Anhand der Figuren 3 und 4 wird nun eine Dichtvorrichtung gemäß einer weiteren Ausführungsform beschrieben. Für die Bauteile, die von den obigen Ausführungsformen bekannt sind, werden dieselben Bezugszeichen verwendet und es wird insoweit auf die vorangegangenen Erläuterungen verwiesen.

In den Figuren 3 und 4 ist jeweils nur der Bereich der Trockenbauwand 10 dargestellt, der die erste Randfuge 24 zeigt. Selbstverständlich kann der Bereich der Trockenbauwand 10, der die zweite Randfuge 26 umfasst, entsprechend ausgebildet sein.

Die in Figur 3 dargestellte Dichtvorrichtung 30 ist für eine Trockenbauwand 10 vorgesehen, die zweilagig beplankt ist. Das bedeutet, die Beplankung 11 hat ein innenliegendes, an die Ständerkonstruktion 16 angrenzendes erstes Beplankungsteil 64 und ein an das erste Beplankungsteil 64 angrenzendes zweites Beplankungsteil 66, das die Außenseite der Trockenbauwand 10 bildet.

Hierzu weist die Auflage 44 eine Breite in Horizontalrichtung H auf, die größer als die Wandstärke eines Beplankungsteils 64, 66 ist

Selbstverständlich kann die Auflage 44 in einer alternativen Ausführungsform eine Breite in Horizontalrichtung H haben, die einem beliebigen Vielfachen der Wandstärke eines Beplankungsteils 64, 66 entspricht. Für eine Dichtvorrichtung 30, die für eine zweilagige Beplankung vorgesehen ist, kann die Auflage 44 insbesondere eine Breite in Horizontalrichtung H haben, die zwischen 150 % und 200 % der Wandstärke eines Beplankungsteils 64, 66 entspricht.

Der erste Grundkörper 34 hat ferner eine Sollbruchstelle 68, die eine vertikale Schnittebene 70 definiert, die den ersten Grundkörper 34 in Horizontalrichtung H in einen Basisabschnitt 72, der dem ersten Beplankungsteil 64 zugeordnet ist, und einen Abtrennabschnitt 74 teilt, der dem zweiten Beplankungsteil 66 zugeordnet ist.

Hierbei entspricht die Breite der Auflage 44 des Basisabschnitts 72 in Horizontalrichtung H der Wandstärke eines Beplankungsteils 64, 66.

Indem der Abtrennabschnitt 74 an der Sollbruchstelle 68 abgetrennt wird, kann der erste Grundkörper 34 definiert so gekürzt werden, dass er an eine Beplankung 11 mit einem Beplankungsteil 64, 66 angepasst ist (siehe Figur 4).

Die Schnittebene 70 verläuft hierbei durch den Hohlraum 58 des ersten Grundkörpers 34, wodurch das Abtrennen mit geringem Aufwand erfolgen kann und zu einem verringerten Materialverlust führt.

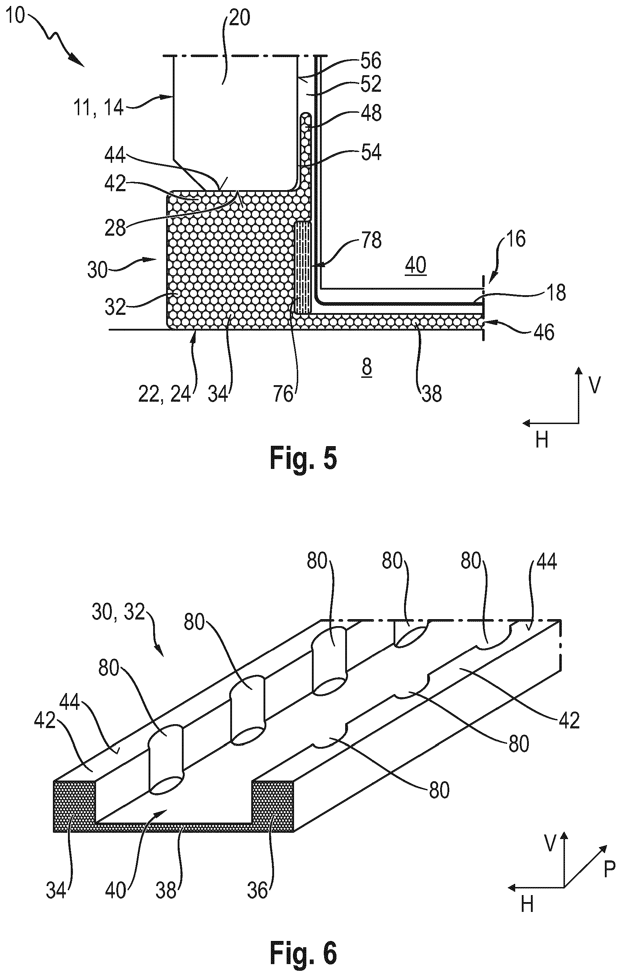

Anhand der Figur 5 wird nun eine Dichtvorrichtung gemäß einer weiteren Ausführungsform beschrieben. Für die Bauteile, die von den obigen Ausführungsformen bekannt sind, werden dieselben Bezugszeichen verwendet und es wird insoweit auf die vorangegangenen Erläuterungen verwiesen.

In der Figur 5 ist nur der Bereich der Trockenbauwand 10 dargestellt, der die erste Randfuge 24 zeigt. Der Bereich der Trockenbauwand 10, der die zweite Randfuge 26 umfasst, kann entsprechend ausgebildet sein.

Im Unterschied zur in Figur 1 dargestellten Ausführungsform hat die Dichtvorrichtung 30 zwei als Brandschutzfunktion vorgesehene intumeszierende Streifen 76, die jeweils in einer an die Aufnahme 40 angrenzenden Ausnehmung 78 im ersten Grundkörper 34 bzw. zweiten Grundkörper 36 (in Figur 5 nicht dargestellt) angeordnet sind.

Grundsätzlich kann die Dichtvorrichtung 30 eine beliebige Anzahl an intumeszierenden Streifen 76 aufweisen, die an beliebigen Stellen der Dichtvorrichtung 30 vorgesehen sind.

Zusätzlich oder alternativ kann das Dichtprofil 32 aus einem Material gebildet sein, dass Brandschutzadditive umfasst.

In allen Ausführungsformen kann eine Brandschutzausführung ohne intumeszierende Streifen 76 bzw. ohne intumeszierendes Material vorgesehen sein, insbesondere wenn das Dichtprofil 32 aus einem temperaturbeständigen Material gebildet ist.

Der erste Grundkörper 34 ist in der in Figur 5 dargestellten Ausführungsform ferner als Vollprofil, d. h. ohne Hohlraum 58, ausgebildet, was aber auch anders sein kann.

Anhand der Figur 6 wird nun eine Dichtvorrichtung gemäß einer weiteren Ausführungsform beschrieben. Für die Bauteile, die von den obigen Ausführungsformen bekannt sind, werden dieselben Bezugszeichen verwendet und es wird insoweit auf die vorangegangenen Erläuterungen verwiesen.

Die in Figur 6 gezeigte Dichtvorrichtung 30 hat eine Positionierhilfe, die durch mehrere in Erstreckungsrichtung P des Dichtprofils 32 voneinander beabstandete Durchgangslöcher 80 gebildet ist, die sich in Vertikalrichtung V durch das Dichtprofil 32 erstrecken.

Auf diese Weise bilden die Durchgangslöcher 80 Sichtfenster, durch die der Untergrund zu sehen ist, auf dem die Dichtvorrichtung 30 platziert ist.

Die Durchgangslöcher 80 sind hierbei an den Seiten der Grundkörper 34, 36 angeordnet, die der Aufnahme 40 zugewandt sind, und erstrecken sich jeweils sowohl durch den Halteabschnitt 38 als auch einen der Grundkörper 34, 36.

Grundsätzlich können die Durchgangslöcher 80 jeweils an einer beliebigen Stelle in einem der Grundkörper 34, 36 und/oder benachbart zu einem der Grundkörper 34, 36 im Halteabschnitt 38 vorgesehen sein.

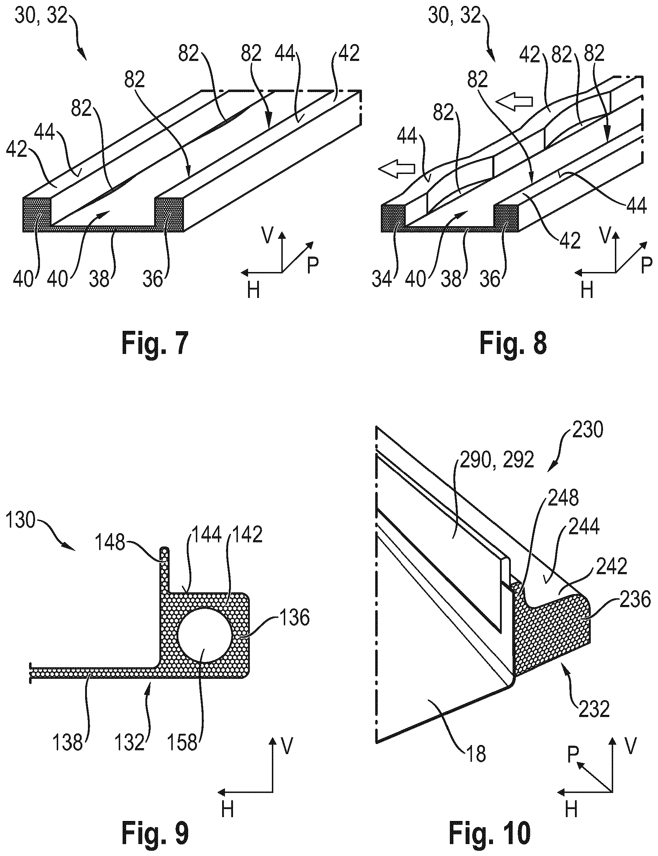

Anhand der Figuren 7 und 8 wird nun eine Dichtvorrichtung gemäß einer weiteren Ausführungsform beschrieben. Für die Bauteile, die von den obigen Ausführungsformen bekannt sind, werden dieselben Bezugszeichen verwendet und es wird insoweit auf die vorangegangenen Erläuterungen verwiesen.

Im Unterschied zur in Figur 6 dargestellten Ausführungsform hat die Dichtvorrichtung 30 eine Positionierhilfe, die durch in Erstreckungsrichtung P des Dichtprofils 32 voneinander beabstandete Längsschnitte 82 anstelle von Durchgangslöchern 80 gebildet ist. Die Längsschnitte 82, die benachbart zum zweiten Grundkörper 36 angeordnet sind, sind in den Figuren 7 und 8 durch den zweiten Grundkörper 36 verdeckt und daher nicht zu sehen.

Die Längsschnitte 82 können dabei zu Sichtfenstern verformt werden, indem der erste Grundkörper 34 in Horizontalrichtung H bzw. der zweite Grundkörper 36 entgegen der Horizontalrichtung H gezogen wird. In Figur 8 sind die auf den ersten Grundkörper 34 wirkenden Zugkräfte durch Pfeile dargestellt.

Sobald am ersten Grundkörper 34 nicht mehr gezogen wird, kehrt der erste Grundkörper 34 aus seinem elastisch verformten Zustand (siehe Figur 8), in dem die Sichtfenster geöffnet sind, wieder in seinen Ausgangszustand (siehe Figur 7) zurück, in dem die Sichtfenster geschlossen sind.

Auf diese Weise ist eine Dichtvorrichtung 30 für eine doppelte Randfuge 22 einer Trockenbauwand 10 bereitgestellt, die in allen Ausführungsformen eine einfache Montage der Dichtvorrichtung 30 zusammen mit dem Aufstellen der Ständerkonstruktion 16 sicherstellt.

Ferner gewährleistet das Dichtprofil 32 eine wirkungsvolle Abdichtung der doppelten Randfuge 22 gegenüber Luft und Schall.

Durch die Dichtvorrichtung 30 wird die Trockenbauwand 10 zu einer brandsicheren Konstruktion, mittels der das Überschlagen von Rauch, Temperatur und Feuer auf die Seite der Trockenbauwand 10 verhindert werden kann, die dem Feuer abgewandt ist.

Die Grundkörper 34, 36 des Dichtprofils 32 gewährleisten eine definierte Fugenbreite und schützen ferner die Beplankungen 11, 12 gegen Nässe im oder auf dem Boden 8, insbesondere in der Bauphase.

Des Weiteren ist die Dichtvorrichtung 30 eine fabrikgefertigte Anwendungslösung mit konstanten Eigenschaften, die das Abdichten von Randfugen mit gleichbleibend hoher Qualität erleichtert.

Insbesondere können mittels der einteiligen Dichtvorrichtung 30 beide Randfugen 24, 26 der doppelten Randfuge 22 mit geringem Aufwand zuverlässig abgedichtet werden.

Alternativ kann die Dichtvorrichtung aus zwei separaten Dichtabschnitten gebildet sein, die jeweils dazu vorgesehen sind, eine der beiden Randfugen 24, 26 der doppelten Randfuge 22 abzudichten.

Jeweils eine Ausführungsform einer derartigen Dichtvorrichtung für eine Randfuge 24, 26 ist in den Figuren 9 und 10 gezeigt. Für die Bauteile, die von den obigen Ausführungsformen bekannt sind, werden entsprechende Bezugszeichen verwendet und es wird insoweit auf die vorangegangenen Erläuterungen verwiesen.

In Figur 9 ist eine Dichtvorrichtung 130 mit einem extrudierten Dichtprofil 132 gezeigt. Der Halteabschnitt 138 wird hierbei im montierten Zustand zwischen der Halteschiene 18 der Ständerkonstruktion 16 und dem angrenzenden Boden, der Wand oder der Decke geklemmt und stellt somit sicher, dass das Dichtprofil 132 zum Abdichten einer Randfuge definiert an der Ständerkonstruktion 16 festgelegt ist.

In Figur 10 ist eine weitere Ausführungsform einer Dichtvorrichtung 230 mit einem extrudierten Dichtprofil 232 gezeigt.

Im Unterschied zu der in Figur 9 dargestellten Ausführungsform hat die Dichtvorrichtung 230 anstelle des Halteabschnitts eine Befestigungseinrichtung 290 in Form eines Hakenabschnitts 292 mittels dem die Dichtvorrichtung 230 an der Halteschiene 18 aufgesteckt werden kann.

Die Befestigungseinrichtung 290 ist beispielsweise ein extrudiertes Profil aus Kunststoff.

Die Erfindung ist nicht auf die gezeigten Ausführungsformen beschränkt. Insbesondere können einzelne Merkmale einer Ausführungsform beliebig mit Merkmalen anderer Ausführungsformen im Rahmen der beigefügten Ansprüche kombiniert werden, insbesondere unabhängig von den anderen Merkmalen der entsprechenden Ausführungsformen.

Beispielsweise können die in den Figuren 6 bis 8 gezeigten Positionierhilfen in allen Ausführungsformen vorgesehen sein. Positionierhilfen sind beispielsweise für die Figur 10 gezeigte Ausführungsform nicht notwendig, da der Montageprozess sinngemäß erst nach der Montage der Halteschiene erfolgt.

Ferner kann jede Dichtvorrichtung für eine einfache und/oder eine doppellagige Beplankung eingerichtet sein.

## Patentansprüche

1. Dichtvorrichtung für eine doppelte Randfuge (22), die zwischen einem Boden (8), einer Wand oder einer Decke und einer angrenzenden ersten Beplankung (11) und einer beabstandeten zweiten Beplankung (12) einer doppelbeplankten Trockenbauwand (10) gebildet ist, umfassend:
ein Dichtprofil (32) mit einem Halteabschnitt (38) sowie einem ersten Grundkörper (34) zum Abdichten einer ersten Randfuge (24) an der ersten Beplankung (11) und einem zweiten Grundkörper (36) zum Abdichten einer zweiten Randfuge (26) an der zweiten Beplankung (12),
wobei der erste Grundkörper (34) einen Trägerabschnitt (42) aufweist, der eine Auflage (44) für die erste Beplankung (11) bildet, und der zweite Grundkörper (36) einen Trägerabschnitt (42) aufweist, der eine Auflage (44) für die zweite Beplankung (12) bildet,
wobei sich der Halteabschnitt (38) zwischen dem ersten und dem zweiten Grundkörper (34, 36) erstreckt und dazu eingerichtet ist, einen Spalt (46) zwischen einer Halteschiene (18) der Trockenbauwand (10) und dem angrenzenden Boden (8), der Wand oder der Decke abzudichten,
wobei der erste und der zweite Grundkörper (34, 36) über den Halteabschnitt (38) miteinander verbunden sind und gemeinsam mit diesem eine U-förmige Aufnahme (40) für die Halteschiene (18) der Trockenbauwand (10) bilden,
**dadurch gekennzeichnet, dass** das Dichtprofil (32) einen sich vom ersten Grundkörper (34) weg erstreckenden ersten Dichtsteg (48) und einen sich vom zweiten Grundkörper (36) weg erstreckenden zweiten Dichtsteg (50) aufweist, wobei der erste Dichtsteg (48) eine seitliche Anlagefläche für die erste Beplankung (11) bildet und dazu eingerichtet ist, einen Spalt (52) zwischen der Halteschiene (18) der Trockenbauwand (10) und der ersten Beplankung (11) abzudichten, und wobei der zweite Dichtsteg (50) eine seitliche Anlagefläche für die zweite Beplankung (12) bildet und dazu eingerichtet ist, einen Spalt (52) zwischen der Halteschiene (18) der Trockenbauwand (10) und der zweiten Beplankung (12) abzudichten,
**dadurch gekennzeichnet, dass** das Dichtprofil (32) in Erstreckungsrichtung (P) des Profils voneinander beabstandete Durchgangslöcher (80) und/oder Längsschnitte (82) aufweist, die eine Positionierhilfe bilden.

2. Dichtvorrichtung nach Anspruch 1, **dadurch gekennzeichnet, dass** die Durchgangslöcher (80) und/oder Längsschnitte (82) jeweils halteschienenseitig im und/oder benachbart zum ersten oder zweiten Grundkörper (34, 36) vorgesehen sind.

3. Dichtvorrichtung nach einem der vorhergehenden Ansprüche, **dadurch gekennzeichnet, dass** die Dichtvorrichtung (30) für jeden Grundkörper (34, 36) einen intumeszierenden Streifen (76) aufweist, insbesondere wobei der intumeszierende Streifen (76) in einer der Halteschiene (18) zugewandten Ausnehmung (78) im entsprechenden Grundkörper (34, 36) vorgesehen ist.

4. Dichtvorrichtung nach einem der vorhergehenden Ansprüche, **dadurch gekennzeichnet, dass** der erste und der zweite Grundkörper (34, 36) jeweils eine Sollbruchstelle (68) aufweisen und/oder jeweils ein Hohlprofil mit zumindest einem Hohlraum (58) sind, insbesondere wobei die Sollbruchstelle (68) benachbart zu einem Hohlraum (58) des entsprechenden Hohlprofils vorgesehen ist.

5. Dichtvorrichtung nach einem der vorhergehenden Ansprüche, **dadurch gekennzeichnet, dass** das Dichtprofil (32) eine Rippenstruktur (60) aufweist, insbesondere an Flächen, die dazu vorgesehen sind, an den Boden (8), die Beplankung (11, 12) und/oder die Halteschiene (18) anzugrenzen.

6. Dichtvorrichtung nach einem der vorhergehenden Ansprüche, **dadurch gekennzeichnet, dass** die Dichtvorrichtung (30) spiegelsymmetrisch gegenüber einer Mittelebene (M) gestaltet ist, die sich in Erstreckungsrichtung (P) des Dichtprofils (32) und senkrecht zum Halteabschnitt (38) erstreckt.

7. Dichtvorrichtung nach einem der vorhergehenden Ansprüche, **dadurch gekennzeichnet, dass** das Dichtprofil (32) ein Extrusionsprofil ist.

8. Dichtvorrichtung nach einem der vorhergehenden Ansprüche, **dadurch gekennzeichnet, dass** das Dichtprofil (32) einstückig und aus einem Schaumstoff oder einem Elastomer gebildet ist.

9. Trockenbauwand mit einer Dichtvorrichtung (30) nach einem der vorhergehenden Ansprüche, einer Halteschiene (18), einer ersten Beplankung (11), die eine erste Wandfläche (14) der Trockenbauwand (10) bildet, und einer zweiten Beplankung (12), die eine zur ersten Wandfläche (14) entgegengesetzte zweite Wandfläche (14) der Trockenbauwand (10) bildet, wobei die Halteschiene (18) in der Aufnahme (40) der Dichtvorrichtung (30) angeordnet ist, wobei der Halteabschnitt (38) zwischen der Halteschiene (18) und dem angrenzenden Boden (8), der Wand oder der Decke angeordnet ist, wobei die erste Beplankung (11) mit ihrer Umfangsseite (28) an der Auflage (44) des ersten Grundkörpers (34) anliegt und die zweite Beplankung (12) mit ihrer Umfangsseite (24) an der Auflage (44) des zweiten Grundkörpers (36) anliegt.

10. Trockenbauwand nach Anspruch 9, **dadurch gekennzeichnet, dass** das Dichtprofil (32) den sich vom ersten Grundkörper (34) weg erstreckenden ersten Dichtsteg (48) und den sich vom zweiten Grundkörper (36) weg erstreckenden zweiten Dichtsteg (50) aufweist, wobei der erste Dichtsteg (48) die, seitliche Anlagefläche für die erste Beplankung (11) bildet und den Spalt (52) zwischen der Halteschiene (18) der Trockenbauwand (10) und der ersten Beplankung (11) abdichtet, und wobei der zweite Dichtsteg (50) die seitliche Anlagefläche für die zweite Beplankung (12) bildet und den Spalt (52) zwischen der Halteschiene (18) der Trockenbauwand (10) und der zweiten Beplankung (12) abdichtet.

## Claims

1. Sealing device for a double edge joint (22) which is formed between a floor (8), a wall, or a ceiling and an adjacent first cladding (11) and a spaced-apart second cladding (12) of a drywall (10) having double-layer cladding, comprising:
a sealing profile (32) having a holding portion (38) and a first base body (34) for sealing a first edge joint (24) on the first cladding (11) and a second base body (36) for sealing a second edge joint (26) on the second cladding (12),
the first base body (34) having a carrier portion (42) which forms a support (44) for the first cladding (11), and the second base body (36) having a carrier portion (42) which forms a support (44) for the second cladding (12),
the holding portion (38) extending between the first and the second base body (34, 36) and being designed to seal a gap (46) between a holding rail (18) of the drywall (10) and the adjacent floor (8), the wall, or the ceiling,
the first and the second base body (34, 36) being connected to one another via the holding portion (38) and, in combination therewith, forming a U-shaped receptacle (40) for the holding rail (18) of the drywall (10),
**characterized in that** the sealing profile (32) has a first sealing web (48) extending away from the first base body (34) and a second sealing web (50) extending away from the second base body (36), the first sealing web (48) forming a lateral contact surface for the first cladding (11) and being designed to seal a gap (52) between the holding rail (18) of the drywall (10) and the first cladding (11), and the second sealing web (50) forming a lateral contact surface for the second cladding (12) and being designed to seal a gap (52) between the holding rail (18) of the drywall (10) and the second cladding (12),
**characterized in that** the sealing profile (32) can have through holes (80) and/or longitudinal cuts (82) which are at a distance from one another in the direction of extent (P) of the profile and which form a positioning aid.

2. Sealing device according to claim 1, **characterized in that** the through holes (80) and/or longitudinal cuts (82) are in each case provided on the holding rail side in and/or adjacent to the first or second base body (34, 36).

3. Sealing device according to either of the preceding claims, **characterized in that** the sealing device (30) has an intumescent strip (76) for each base body (34, 36), in particular the intumescent strip (76) being provided in a recess (78) facing the holding rail (18) in the corresponding base body (34, 36).

4. Sealing device according to any of the preceding claims, **characterized in that** the first and the second base body (34, 36) each have a predetermined breaking point (68) and/or are each a hollow profile having at least one cavity (58), in particular the predetermined breaking point (68) being provided adjacent to a cavity (58) of the corresponding hollow profile.

5. Sealing device according to any of the preceding claims, **characterized in that** the sealing profile (32) has a rib structure (60), in particular on surfaces which are provided to be adjacent to the floor (8), the cladding (11, 12) and/or the holding rail (18).

6. Sealing device according to any of the preceding claims, **characterized in that** the sealing device (30) is designed mirror-symmetrically with respect to a central plane (M) which extends in the direction of extent (P) of the sealing profile (32) and perpendicular to the holding portion (38).

7. Sealing device according to any of the preceding claims, **characterized in that** the sealing profile (32) is an extrusion profile.

8. Sealing device according to any of the preceding claims, **characterized in that** the sealing profile (32) is in one piece and is formed from a foam or an elastomer.

9. Drywall having a sealing device (30) according to any of the preceding claims, a holding rail (18), a first cladding (11) which forms a first wall surface (14) of the drywall (10), and a second cladding (12) which forms a second wall surface (14) of the drywall (10) opposite the first wall surface (14), wherein the holding rail (18) is arranged in the receptacle (40) of the sealing device (30), wherein the holding portion (38) is arranged between the holding rail (18) and the adjacent floor (8), the wall or the ceiling, wherein the first cladding (11) rests with the peripheral side (28) thereof on the support (44) of the first base body (34) and the second cladding (12) rests with the peripheral side (24) thereof on the support (44) of the second base body (36).

10. Drywall according to claim 9, **characterized in that** the sealing profile (32) has the first sealing web (48) extending away from the first base body (34) and the second sealing web (50) extending away from the second base body (36), the first sealing web (48) forming the lateral contact surface for the first cladding (11) and sealing the gap (52) between the holding rail (18) of the drywall (10) and the first cladding (11), and the second sealing web (50) forming the lateral contact surface for the second cladding (12) and sealing the gap (52) between the holding rail (18) of the drywall (10) and the second cladding (12).

## Revendications

1. Dispositif d'étanchéité pour un double joint périphérique (22) formé entre un plancher (8), une paroi ou un plafond et un premier parement (11) adjacent et un second parement (12) espacé d'une cloison sèche (10) à double parement, comprenant :
un profilé d'étanchéité (32) comportant une section de maintien (38) ainsi qu'un premier corps de base (34) pour assurer l'étanchéité d'un premier joint périphérique (24) sur le premier parement (11) et un second corps de base (36) pour assurer l'étanchéité d'un second joint périphérique (26) sur le second parement (12),
dans lequel le premier corps de base (34) présente une section de support (42) qui forme un appui (44) pour le premier parement (11), et le second corps de base (36) présente une section de support (42) qui forme un appui (44) pour le second parement (12),
dans lequel la section de maintien (38) s'étend entre le premier et le second corps de base (34, 36) et est conçue pour rendre étanche une fente (46) entre un rail de maintien (18) de la cloison sèche (10) et le plancher (8), la paroi ou le plafond adjacent,
dans lequel le premier et le second corps de base (34, 36) sont reliés l'un à l'autre par l'intermédiaire de la section de maintien (38) et forment conjointement avec celle-ci un logement (40) en forme de U pour le rail de maintien (18) de la cloison sèche (10),
**caractérisé en ce que** le profilé d'étanchéité (32) présente une première barrette d'étanchéité (48) s'étendant à partir du premier corps de base (34) et une seconde barrette d'étanchéité (50) s'étendant à partir du second corps de base (36), dans lequel la première barrette d'étanchéité (48) forme une surface d'appui latérale pour le premier parement (11) et est conçue pour rendre étanche une fente (52) entre le rail de maintien (18) de la cloison sèche (10) et le premier parement (11), et dans lequel la seconde barrette d'étanchéité (50) forme une surface d'appui latérale pour le second parement (12) et est conçue pour rendre étanche une fente (52) entre le rail de maintien (18) de la cloison sèche (10) et le second parement (12),
**caractérisé en ce que** le profilé d'étanchéité (32) présente des trous traversants (80) et/ou des découpes longitudinales (82) espacés les uns des autres dans la direction d'extension (P) du profilé et formant une aide au positionnement.

2. Dispositif d'étanchéité selon la revendication 1, **caractérisé en ce que** les trous traversants (80) et/ou les découpes longitudinales (82) sont respectivement prévus côté rail de maintien dans le premier ou le second corps de base (34, 36) et/ou à proximité de celui-ci.

3. Dispositif d'étanchéité selon l'une des revendications précédentes, **caractérisé en ce que** le dispositif d'étanchéité (30) présente pour chaque corps de base (34, 36) une bande intumescente (76), en particulier dans lequel la bande intumescente (76) est prévue dans un évidement (78) tourné vers le rail de maintien (18) dans le corps de base (34, 36) correspondant.

4. Dispositif d'étanchéité selon l'une des revendications précédentes, **caractérisé en ce que** le premier et le second corps de base (34, 36) présentent respectivement un point de rupture cible (68) et/ou sont respectivement un profilé creux comportant au moins un espace creux (58), en particulier dans lequel le point de rupture cible (68) est prévu à proximité d'un espace creux (58) du profilé creux correspondant.

5. Dispositif d'étanchéité selon l'une des revendications précédentes, **caractérisé ence que** le profilé d'étanchéité (32) présente une structure nervurée (60), en particulier sur des surfaces prévues pour être adjacentes au plancher (8), au parement (11, 12) et/ou au rail de maintien (18).

6. Dispositif d'étanchéité selon l'une des revendications précédentes, **caractérisé en ce que** le dispositif d'étanchéité (30) est conçu avec une symétrie en miroir par rapport à un plan médian (M) qui s'étend dans la direction d'extension (P) du profilé d'étanchéité (32) et perpendiculairement à la section de maintien (38).

7. Dispositif d'étanchéité selon l'une des revendications précédentes, **caractérisé en ce que** le profilé d'étanchéité (32) est un profilé extrudé.

8. Dispositif d'étanchéité selon l'une des revendications précédentes, **caractéris en ce que** le profilé d'étanchéité (32) est monobloc et formé à partir d'une mousse ou d'un élastomère.

9. Cloison sèche comportant un dispositif d'étanchéité (30) selon l'une des revendications précédentes, un rail de maintien (18), un premier parement (11) qui forme une première surface de cloison (14) de la cloison sèche (10), et un second parement (12) qui forme une seconde surface de cloison (14) de la cloison sèche (10) opposée à la première surface de cloison (14), dans laquelle le rail de maintien (18) est disposé dans le logement (40) du dispositif d'étanchéité (30), dans laquelle la section de maintien (38) est disposée entre le rail de maintien (18) et le plancher (8), la paroi ou le plafond adjacent, dans laquelle le premier parement (11) s'appuie avec son côté circonférentiel (28) sur l'appui (44) du premier corps de base (34) et le second parement (12) s'appuie avec son côté circonférentiel (24) sur l'appui (44) du second corps de base (36).

10. Cloison sèche selon la revendication 9, **caractérisée en ce que** le profilé d'étanchéité (32) présente la première barrette d'étanchéité (48) s'étendant à partir du premier corps de base (34) et la seconde barrette d'étanchéité (50) s'étendant à partir du second corps de base (36), dans laquelle la première barrette d'étanchéité (48) forme la surface d'appui latérale pour le premier parement (11) et assure l'étanchéité de la fente (52) entre le rail de maintien (18) de la cloison sèche (10) et le premier parement (11), et dans laquelle la seconde barrette d'étanchéité (50) forme la surface d'appui latérale pour le second parement (12) et assure l'étanchéité de la fente (52) entre le rail de maintien (18) de la cloison sèche (10) et le second parement (12).
